# EUROPEAN PATENT APPLICATION

(11) **EP 2 947 892 A1**
(43) Date of publication of application: **25.11.2015**
(21) Application number: 15425033.6
(22) Date of filing: 13.05.2015
(51) Int. Cl.: H04Q 1/02, H04W 64/00

(54) **TELEPHONE NETWORK STRUCTURE DOCUMENTATION FORMING AND/OR UPDATING SYSTEM, IN PARTICULAR FOR AN OPTICAL FIBER NETWORK**

(30) Priority: 20.05.2014 IT RM20140076 U
(71) Applicant: C.I.S. Sud s.r.l., 00040 Ariccia (RM) (IT)
(72) Inventor: Bernardini, Giuseppe, 00040 Ariccia (RM) (IT)
(74) Representative: Santi, Filippo

(57) **Abstract**

The present invention concerns a telephone network structure documentation forming and/or updating system, in particular for an optic fiber network, characterised in that it comprises one or more mobile devices (10) for data acquisition and one or more central servers (13) for processing and storing such data, said mobile devices (10) and said servers (13) communicating through a communication network (12), said mobile devices being provided with reading apparatuses of identification tags (11, 15) of said telephone network and being programmed to allow the acquisition of the data of said identification tags (11, 15) and to allow interaction with said servers (13), for the purpose of data exchange and organization of the same.

## Description

The present invention concerns a telephone network structure documentation forming and/or updating system, in particular for an optic fiber network.

More particularly, the invention relates to a system said, provided with one or more mobile devices for reading the identification labels of the elements of a telephone network and for communicating the reading carried to a central computer, where the information are received processed and stored for being subsequently ready for consultation.

Still more in particular, said portable devices for reading the identification labels (also called tags) are able of reading labels of different types, alternatively used for the identification of the elements of a telephone network.

It is known that, in the activities of installation of traditional telephone networks made with copper, the cable is buried in an excavation 80 cm deep with respect to the road and/or country level. In particular, the cable is routed in the seat of the excavation, and it is mechanically protected being arranged within tunnels of concnetwork and/or deposit of iron, in order to assure an enhanced protection of the integrity over time, even in particolar cases in which the route of the network is more difficult.

Along the lines forming the network, the different pieces of cable which cover the path of the lines themselves are connected between them by means of joints arranged within special containers of junction (called junction boxes) which are also buried in the excavation.

In urban environment, the cables are arranged inside pipes, and the joints are prepared inside the so called rooms, spaces where different pipes arrive and which are accessibile from the road level through openings provided with lids that can be opened, called manholes and generally made in cast iron.

The cables of the network ends in a central station and/or in an intermediate station arranged along the line, usually on the road, within structurs, the so called line splitting cabinets, inside which are arranged apparatuses of termination or junction of the cables, the so called split strips.

Generally, cables and all the components of a telephone network are topographically represented on a 1:1000 scale on a cartographic document composed of several sheets, covering all the path of the system. Such document forms the so called position strips.

The position strips provide a reference for consultation during system maintenance and/or modification interventions, which allow for the individuation of the network with its particular accessory elements.

Any variation of the network as aconsequence of machining interventions is graphically reported on the relative sheet of the position strips.

Recently, in correspondence with the replacement of copper cables with optic cables, many characteristic aspects in the making of the network have changed. In particular, the paying of the cables is made always inside a prepared piping, both in urban and in country route; the joints are all put in a room; the terminations of the optic fibres in the central station and/or in the line splitting cabinets, more and more densely populated in tight spaces, become the so called optic ports. The optic ports are the terminations of the fibres on connectors, which are collected individually in the seats side by side and ordered in tight spaces of the so called racks.

At present, the essential elements that make a telephone network and are arranged in a cetral station are: the high density optic permutators, the racks (or ODF, optical-fiber distribution frame) and the optical fibre fibre subracks; whereas along the line are present: the cables, the rooms, the junction boxes, the optical studs, the building optical splitters.

With these new installation aspects, the main feature of the position strips, i.e. the one markedly topographic, becomes less and less important and representative. Additionally, the increase in the number of realised optical networks, also characterised by necessary changes of the configuration over time, has made this old system of cartographic documentation too challenging and inefficient. Therefore, the position strips have been slowly abandoned, with the consequence that, in the present situation, there is no more an officially documented description of the making of the network.

In order to allow to identify the single elements of the network, to each of these elements is associated an identification label, the so called tag, which has its own recognition code and the reading/decodifying of which allows to obtain all the informations on the element to which it is associated. However, different kinds of tag exist, such as for example the QR-Code, the "clear" code QR-Code, the radio frequency identification tags or RFID (radio frequency identificator) and the LED boards, the features of any of which will be explained in detail in the following. The choice of use of anuìy kind of tag is therefore made by taking into account the environmental conditions of the position of the different network objects and the role of the shape of construction, so that the reading is easy and always possible over time. Additionally, for an equal functional choice, the overwhelming choice is made on the basis of their current market cost.

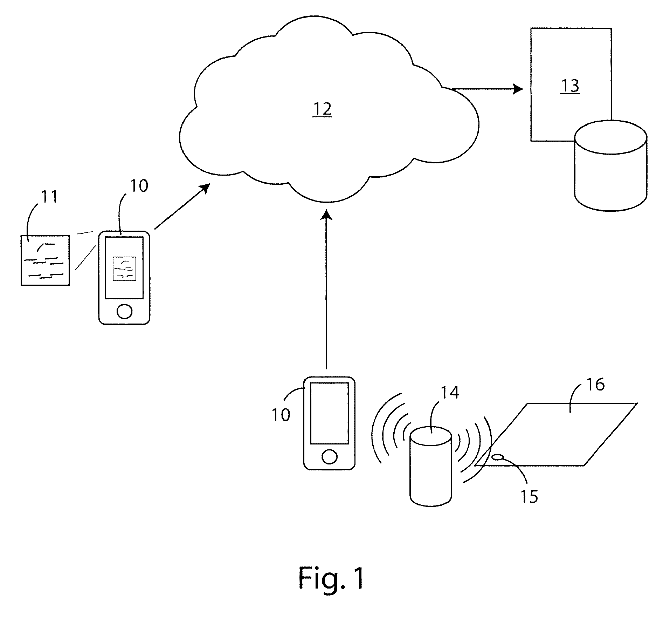

In particular, the QR code is made commercially by a drawing of light and dark signs, which by their disposition describe a precise code. The drawing can be obtained by printing on plain paper or on a base made of plastic by means of laser working. The first case is very cheap, while the second is more expensive. The first is used fixed on optical fibre subracks in a central telephone station, where it is not deteriored over time, whereas the second can be used, with support, on operative cables.

The RFID tags are made commercially in the form of a circular support made of plastic, which contains an antenna and a memory storage microchip. The RFID tag can be used always, except in close spaces of positioning, wherein it is difficult the reading identification of the single tags, as also in the case of the QR-Code. In plastric objects can be placed inside, since it is possible to read it from the outside through walls having thin thickness. For these reasons it is often associated with junction boxes and studs. In many cases, moreover, the RFID tag is used with support elements for an easy installation and/or a better mechanical protection, such as with the cables of different capacity (normal cable, minicable, mono fibre cable), in manholes (with seat formed on the outer surface of the same for the positioning of the RFID tag).

The LED boards are used where spaces are closed in order to position more tags, which otherwise would be too close to each other. In practice, they supply the cases in which QR codes and RFID tags cannot be used, such as in the case of high density optical split patch panel and building optical splitter. The LED board is composed of an electronic circuit that repeats the geometric form of a rack for optic ports, and that, in correspondence of each optic port, is provided with a LED, which, when it is on, indicates the interested port. A microchip stores the univocal code of the board and manages the LEDs. The LED board is necessary where it is not possible to install more tags because of the closelyness of interspacespace between them, is cheap, because it realises at the same time the replacement of more tags and is efficient for a safe operability, since the LED remains on during the whole intervention, always signalling the port.

Given the variability of the type of tag to which network elements can be associated, it follows that the establishment of the network documentation requests accessing to each of these tags, reading the information contained in it and storing it in an organised way.

The problem that this invention aims to solve concerns the possibility to reconstruct this description document, by identification of the different elements of the network, and collection and memory storage of the information of interest connected to them in a simple way, by providing an apparatus which can adapt to reading the different types of tags and store their information in a structured way.

It is therefore a specific object of the present invention a telephone network structure documentation forming and/or updating system, in particular for an optic fiber network, which comprises one or more mobile devices for data acquisition and one or more central servers for processing and storing such data, said mobile devices and said servers communicating through a communication network, said mobile devices being provided with reading apparatuses of identification tags of said telephone network and being programmed to allow the acquisition of the data of said identification tags and to allow the interaction with said server, for the purpose of data exchange and organization of the same.

Preferably, according to the present invention, said mobile devices for data acquisition are smartphones of commercial type provided with a specific application (app).

In particular, according to the present invention, said telephone network structure documentation forming and/or updating system can additionally comprise an interface device between said mobile devices for data acquisition and said identification tags of said telephone network.

The present invention will now be described, for illustrative but not limitative purposes, according to its preferred embodiment, with particular reference to the attached figure, wherein is shown a schematization of the telephone network structure documentation forming system according to the present invention.

Referring to the figure, the telephone network structure documentation forming system, in particular a fiber-optic network, according to the present invention consists of one or more devices for data acquisition suitably programmed, typically smartphones 10 of commercial type equipped with a suitable application (app), which read the information on each tag, for example a QR code 11 and, through connection 12 (which may be by way of example but with no limitation a mobile telephone network or the Internet network, communicates the acquired information to one or more central servers 13 of organisation and memory storage. In some cases, the smartphone 10 is associated with an interface device 14, necessary for the acquisition of data by a LED board or, as in the case in figure, with a RFID tag 15 positioned for example on a manhole 16 for access to an underlying room.

With respect to a LED board, the interface device 14 performs the following functions: give power to the LEDs electronic circuit, interfaces via Bluetooth the recognition code of the electronic circuit, manages via Bluetooth the switching on of any single LED.

To allow to have a plurality of acquisition devices while minimizing costs, as an acquisition device is conveniently used a normal smartphone, where appropriate provided with a specific application (app). This application allows to communicate with the server 13, managing the tags and the support documental description stored on the server.

The app essentially organises the following funtions: stores the collected tags, by relating them with the data of the existing support documental descriptions, leads the correct individuation of the tags, updates from the field the data of the support documental description, visually report all the data managed during the intervention.

From the above, it is apparent that the telephone network structure documentation forming and/or updating system, in particular for an optic fiber network according to the present invention represents in a whole a unique and innovative instrument, which can become indispensable for construction and management works of telephone networks, in particular optical ones.

The main and immediate benefits which can be achieved are evident and can be summarised as follows:
- reduction of the processing time for availability of data on the field,
- reduction of the operative errors due to incorrect individuation of the network elements, through the tags,
- guided interventions for the operation in the main design, installation and management processes,
- production of documentation in real time during the operation process,
- control of the process indexes, such as the KPI (Key Performance Indicator), all calculated on the basis of ascertained detailed data.

The present invention has been described for illustrative but not limitative purposes according to its preferred embodiments, but it is to be understood that variations and/or modifications may be made by those skilled in the art without departing from the relevant scope and protection, as defined by the appended claims.

## Claims

1. Telephone network structure documentation forming and/or updating system, in particular for an optic fiber network, **characterised in that** it comprises one or more mobile devices (10) for data acquisition and one or more central servers (13) for processing and storing such data, said mobile devices (10) and said servers (13) communicating through a communication network (12), said mobile devices being provided with reading apparatuses of identification tags (11, 15) of said telephone network and being programmed to allow the acquisition of the data of said identification tags (11, 15) and to allow interaction with said servers (13), for the purpose of data exchange and organization of the same.

2. Telephone network structure documentation forming and/or updating system according to claim 1, **characterised in that** said mobile devices (10) for data acquisition are smartphones of commercial type provided with a specific application (app).

3. Telephone network structure documentation forming and/or updating system according to claims 1 or 2, **characterised in that** it additionally comprises an interface device (14) between said mobile devices (10) for data acquisition and said identification tags (11, 15) of said telephone network.
